# EUROPÄISCHE PATENTSCHRIFT

(11) **EP 0 711 807 B1**
(45) Veröffentlichungstag und Bekanntmachung des Hinweises auf die Patenterteilung: **01.04.1998**
(21) Anmeldenummer: 95117107.3
(22) Anmeldetag: 31.10.1995
(51) Int. Cl.: C08L 51/00, C08L 51/04

(54) **Matte thermoplastische Formmassen**
Thermoplastic moulding compositions with a mat aspect
Masses de moulage thermoplastiques mattes

(30) Priorität: 09.11.1994 DE 4439969
(43) Veröffentlichungstag der Anmeldung: 15.05.1996
(73) Patentinhaber: BASF AKTIENGESELLSCHAFT, 67056 Ludwigshafen (DE)
(72) Erfinder: Fischer, Wolfgang, Dr., D-67067 Ludwigshafen (DE); Güntherberg, Norbert, Dr., D-67346 Speyer (DE)

(56) Entgegenhaltungen:
- EP-A- 0 594 056
- EP-A- 0 597 275
- DE-A- 3 421 353

## Beschreibung

Die vorliegende Erfindung betrifft thermoplastische Formmassen, enthaltend als wesentliche Komponenten,
A) 4,9 - 95 Gew.-%, bezogen auf das Gesamtgewicht der Formmasse, eines Pfropfpolymerisats aus
   a₁) 30 - 90 Gew.-%, bezogen auf A), einer kautschukelastischen Pfropfgrundlage mit einer Glasübergangstemperatur von weniger als 0°C und einer mittleren Teilchengröße (d₅₀) im Bereich von 30-1000 nm, auf der Basis von, bezogen auf a1),
      a₁₁) 50 - 99,8 Gew.-%, bezogen auf a₁), Alkylacrylaten mit 1 bis 8 C-Atomen im Alkylrest, Dienen oder deren Mischungen
      a₁₂) 0 - 5 Gew.-%, bezogen auf a₁), polyfunktionellen, vernetzend wirkenden Monomeren
      a₁₃) 0 - 49,8 Gew.-%, bezogen auf a₁), weiteren ethylenisch ungesättigten, copolymerisierbaren von a₁₁) und a₁₄) verschiedenen Monomeren und
      a₁₄) 0,1 - 10 Gew.-%, bezogen auf a₁), Hydroxyalkyl(meth)acrylaten oder basische Gruppen enthaltenden ethylenisch ungesättigten Monomeren oder deren Mischungen oder
      a₁₅) 0,1 - 10 Gew.-% eines Monomeren a₂₃)
      und
   a₂) 10 - 70 Gew.-%, bezogen auf A), einer Pfropfhülle mit einer Glasübergangstemperatur oberhalb von 25°C, auf der Basis von
      a₂₁) 0 - 99,9 Gew.-% eines vinylaromatischen Monomeren
      a₂₂) 0 - 99,9 Gew.-% mindestens eines polaren ethylenisch ungesättigten Monomeren
      a₂₃) 0,1 - 20 Gew.-% eines eine oder mehrere saure Gruppen enthaltenden ethylenisch ungesättigten Monomeren, oder
      a₂₄) 0,1 - 20 Gew.-% eines Monomeren a₁₄),
B) 4,9 - 95 Gew.-%, bezogen auf das Gesamtgewicht der Formmasse, mindestens eines Polymeren mit einer Glasübergangstemperatur von mehr als 25°C,
C) 0,1 - 10 Gew.-%, bezogen auf das Gesamtgewicht der Formmasse, Verbindungen mehrwertiger Metalle, ausgewählt aus den Carbonaten, Sulfaten, Phosphaten und Carbonsäuresalzen der Erdalkalimetalle, des Zinks, des Aluminiums, des Zinns und den Carbonaten, Sulfaten, Phosphaten und Carbonsäuresalzen der Metalle der VIII. Nebengruppe des Periodensystems,
D) 0 - 40 Gew.-%, bezogen auf das Gesamtgewicht der Formmasse, übliche Zusatzstoffe und Verarbeitungshilfsmittel,
mit der Maßgabe, daß, wenn in der Pfropfgrundlage Monomere a₁₄) vorhanden sind, in der Pfropfhülle Monomere a₂₃) vorhanden sind und, wenn in der Pfropfgrundlage Monomere a₁₅) vorhanden sind, in der Pfropfhülle Monomere a₂₄) vorhanden sind.

Weiterhin betrifft die Erfindung die Verwendung derartiger Formmassen zur Herstellung von Folien und Formkörpern und die so erhältlichen Folien und Formkörper.

Zur Verbesserung der Schlagzähigkeit an sich spröder, schlagempfindlicher Thermoplaste werden häufig teilchenförmige Pfropfpolymerisate verwendet. Die Herstellung teilchenförmiger Pfropfpolymerisate aus einem kautschukelastischen Kern, d.h. einem Polymeren mit einer Glasübergangstemperatur von unter 0°C, und einer Pfropfhülle mit einer Glasübergangstemperatur von über 25°C z.B. durch Emulsionspolymerisation, ist bekannt. Hierzu wird zunächst durch Emulsionspolymerisation geeigneter Monomerer eine Pfropfgrundlage hergestellt. Die Monomeren, die die Pfropfhülle bilden sollen, werden dann in Gegenwart der Pfropfgrundlage so polymerisiert, daß ein möglichst hoher Anteil auf die Pfropfgrundlage gepfropft wird. Dabei werden die Monomeren für die Pfropfhülle vorzugsweise so gewählt, daß diese mit dem zu modifizierenden Thermoplasten verträglich ist. Die Herstellung solcher Schlagzähmodifier ist seit langem bekannt und z.B. in der US-PS 30 55 859 und der DE-PS 12 60 135 beschrieben. Es ist auch bekannt, daß bei Abmischung bestimmter Pfropfpolymerisate mit Thermoplasten Formkörper mit matten Oberflächen erhalten werden können (EP-A- 450 511, DE-A-34 21 353).

Besonders gefordert werden Formmassen mit matter Oberfläche, deren Oberflächenglanz unabhängig ist von den gewählten Verarbeitungsbedingungen und die gleichzeitig gute Zähigkeiten aufweisen. Für die Zähigkeit solcher teilchenförmiger Pfropfpolymerisate ist die Anbindung der Pfropfhülle an die Pfropfgrundlage wichtig. Bei schlechter Anbindung ist die schlagzähmodifizierende Wirkung nicht ausreichend, so daß nur Produkte mit verminderter Zähigkeit erhalten werden können. Zur Verbesserung der Anbindung wurden eine Reihe von Maßnahmen vorgeschlagen. EP-A-450 511 beschreibt eine Verbesserung der Anbindung, wenn als Pfropfgrundlage ein Polymerisat verwendet wird, das saure Gruppen enthaltende Monomere einpolymerisiert enthält und auf das als Pfropfhülle basische Gruppen enthaltende Monomere gepfropft werden. Daraus hergestellte thermoplastische Formmassen zeigen matte Oberflächen, wobei der Oberflächenglanz jedoch stark von den Verarbeitungsbedingungen abhängt. Als weitere Möglichkeit zur Erzielung guter Zähigkeiten wird in EP-A-445 601 der Einsatz von Hydroxyalkylacrylat oder -methacrylat in der Pfropfgrundlage beschrieben, wobei jedoch keine matten Produkte erhalten werden.

In der DE-A-3 405 938 wird der Einsatz von Pfropfpolymerisaten mit sauren Funktionen beschrieben, jedoch nur in Kombination mit Thermoplastharzen mit basischen Funktionen. Diese Polymermischungen zeigen zwar matte Oberflächen, aber die erreichte Zähigkeit ist für viele Anwendungen nicht ausreichend.

Die DE-A-3 421 353 beschreibt Pfropfpolymerisate, bei denen in die Pfropfhülle Säuren oder Basen bzw. Säuren und Basen gleichzeitig einpolymerisiert werden. Der Glanz bei diesen Produkten hängt jedoch von den Verarbeitungsbedingungen ab.

In der EP-A 594 056 sind Pfropfpolymerisate beschrieben, die saure Monomere in der Pfropfgrundlage sowie basische Monomere und Hydroxyalkyl(meth)acrylate in der Pfropfhülle enthalten.

Die EP-A 597 275 offenbart Pfropfpolymerisate, enthaltend saure Monomere in der Pfropfgrundlage und Hydroxyalkyl(meth)acrylate in der Pfropfhülle.

Der vorliegenden Erfindung lag daher die Aufgabe zugrunde, thermoplastische Formmassen zur Verfügung zu stellen, die zu matten Formkörpern verarbeitet werden können und einen von den Verarbeitungsbedingungen unabhängigen Oberflächenglanz aufweisen.

Diese Aufgabe wurde erfindungsgemäß durch die thermoplastischen Formmassen gemäß Anspruch 1 gelöst.

Bevorzugte thermoplastische Formmassen sind den Unteransprüchen zu entnehmen.

Als Komponente A) enthalten die erfindungsgemäßen thermoplastischen Formmassen 4,9 bis 95, vorzugsweise 10 bis 74,9 und insbesondere 15 bis 50 Gew.-% eines Pfropfpolymerisats aus einer kautschukelastischen Pfropfgrundlage a₁) und mindestens einer Pfropfhülle a₂).

Die Pfropfgrundlage a₁) weist eine Glasübergangstemperatur von weniger als 0°C , vorzugsweise von unter -10°C, und eine Teilchengröße (Mittelwert d₅₀) im Bereich von 30 bis 1000 nm, vorzugsweise von 50 bis 800 nm und besonders bevorzugt von 80 bis 600 nm auf. Der Mittelwert d₅₀ ist dabei die mittlere Teilchengröße, oberhalb und unterhalb derer die Durchmesser von jeweils 50 Gew.-% der Teilchen liegen.

Die Propfgrundlage a₁) ist aufgebaut aus Monomeren a₁₁), a₁₂), a₁₃) und a₁₄), die nachfolgend detaillierter beschrieben werden.

Als Monomere a₁₁), deren Anteil an a₁) 50 bis 99,8, vorzugsweise 60 bis 99 Gew.-%, beträgt, können Acrylsäurealkylester mit 1 bis 8 C-Atomen oder Diene oder deren Mischungen eingesetzt werden. Bevorzugte Alkylacrylate sind solche mit 4 bis 8 C-Atomen, insbesondere Ethyl-, n-Butyl- und 2-Ethylhexylacrylat. Es versteht sich, daß auch Mischungen verschiedener Alkylacrylate eingesetzt werden können.

Die Alkylacrylate können ganz oder teilweise durch Diene, insbesondere 1,3-Butadien und Isopren ersetzt werden.

Im Fall der überwiegenden oder vollständigen Verwendung von Alkylacrylaten ist es zur Erzielung guter mechanischer Eigenschaften häufig vorteilhaft, polyfunktionelle, vernetzend wirkende Monomere in Mengen von bis zu 5, vorzugsweise 0,2 bis 4 und insbesondere 0,5 bis 3 Gew.-%, bezogen auf a₁), als Komponente a₁₂) einzusetzen. Dabei kann es sich prinzipiell um beliebige Monomere handeln, die mindestens zwei nicht in 1,3-Stellung konjugierte ethylenische Doppelbindungen enthalten. Beispielhaft seien Divinylbenzol, Diallymaleat, Diallyfumarat, Diallyphthalat, Allylmethacrylat, Triallylcyanurat, Triallylisocyanurat, Acrylsäureester des Tricyclodedienylalkohols, Diallylphthalat und Dihydrodicyclopentadienylacrylat erwähnt, von denen die drei letztgenannten bevorzugt werden.

Als Komponente a₁₃) können bei der Herstellung der Pfropfgrundlage bis zu 49,8, vorzugsweise 3 bis 45 und insbesondere 5 bis 40 Gew.-% weiterer ethylenisch ungesättigter, copolymerisierbarer, von a₁₁) und a₁₄) verschiedene Monomere eingesetzt werden. Nur beispielhaft seien hier Alkylmethacrylate mit 1 bis 8 C-Atomen, Vinylalkylether mit 1 bis 8 C-Atomen im Alkylrest, Styrol oder kernsubstituiertes Styrol und Maleinsäureanhydrid oder deren Mischungen erwähnt.

Die Mitverwendung von Hydroxyalkyl(meth)acrylaten und/oder basische Gruppen enthaltenden ethylenisch ungesättigten Monomeren oder deren Mischungen (a₁₄), insbesondere in Kombination mit den weiter unten beschriebenen Monomeren a₂₃) in der Pfropfhülle verbessert die Anbindung der Pfropfhülle an die Pfropfgrundlage.

Entsprechendes gilt für die Kombination der in der Pfropfgrundlage verwendbaren Monomeren a₁₅) mit a₂₄) in der Pfropfhülle.

Als geeignete Hydroxyalkyl(meth)acrylate werden solche mit 1 bis 8, insbesondere 2 bis 6 C-Atomen im Alkylrest wie 2-Hydroxyethylacrylat, 2-Hydroxyethylmethacrylat und 4-Hydroxybutylacrylat bevorzugt.

Als Beispiele für Monomere mit basischen Gruppen sind insbesondere solche mit tertiären Aminogruppen bevorzugt. Beispielhaft seien genannt: Dimethylaminoethyl(meth)acrylat, Morpholinmethacrylat, N-Vinylimidazol, p-Dimethylaminostyrol, N-Vinylcarbazol, 3-Vinylpyridin, 4-Vinylpyridin, sowie deren Gemische. Besonders bevorzugte Monomere sind Ester der Acrylsäure oder Methacrylsäure mit aliphatischen Alkoholen, die im Alkylrest eine tertiäre Aminogruppe enthalten, wie z.B. Dimethylaminoethyl(meth)acrylat. Beispiele für Monomere a₁₅) sind weiter unten bei der Beschreibung der Komponente a₂₃) angegeben.

Die Herstellung des Pfropfmischpolymerisats kann nach der in der DE-PS 12 60 135 beschriebenen Methode erfolgen. Hierzu wird zunächst die Pfropfgrundlage a₁) hergestellt. Wenn die Pfropfgrundlage ein Acrylatkautschuk sein soll, wird der oder die Acrylsäureester a₁₁), das polyfunktionelle Monomere a₁₂) und das Hydroxyalkylacrylat oder -methylacrylat oder Monomere mit basischen Gruppen a₁₄) in wäßriger Emulsion bei 20 bis 100°C, bevorzugt zwischen 50 und 80°C polymerisiert. Es können die üblichen Emulgatoren wie die Alkalisalze von Alkyl- oder Alkylarylsulfonsäuren, Alkylsulfate, Fettalkoholsulfonate, Salze höherer Fettsäuren mit 10 bis 30 Kohlenstoffatomen oder Harzseifen verwendet werden. Vorzugsweise werden die Natriumsalze von Alkylsulfonaten oder von Fettsäuren mit 10 bis 18 Kohlenstoffatomen eingesetzt. Es ist günstig, die Emulgatoren in einer Menge von 0,5 bis 5 Gew.-%, insbesondere von 1 bis 2 Gew.-%, bezogen auf das Gesamtgewicht der für die Herstellung der Pfropfgrundlage verwendeten Monomeren, einzusetzen. Im allgemeinen wird bei einem Wasser/Monomer-Verhältnis von 2:1 bis 0,7:1 gearbeitet. Als Polymerisationsinitiatoren dienen insbesondere die gebräuchlichen Persulfate, wie z.B. Kaliumperoxodisulfat; es sind jedoch auch Redoxsysteme geeignet. Die Menge an Initiatoren (z.B. 0,1 bis 1 Gew.-%, bezogen auf das Gesamtgewicht der Monomeren) richtet sich in bekannter Weise nach dem gewünschten Molgewicht.

Als Polymerisationshilfsstoffe können die üblichen Puffersubstanzen, durch welche pH-Werte von vorzugsweise 6 bis 9 eingestellt werden, z.B. Natriumbicarbonat und Natriumpyrophosphat, sowie bis 3 Gew.-% eines Molekulargewichtsreglers, wie Mercaptan, Terpinol oder dimeres alpha-Methylstyrol verwendet werden.

Die genauen Polymerisationsbedingungen, insbesondere Art, Dosierung und Menge des Emulgators werden innerhalb der oben angegebenen Bereiche so bestimmt, daß der erhaltene Latex des vernetzten Acrylsäureester-Polymerisats einen d₅₀-Wert im Bereich von etwa 30 bis 1000 nm, bevorzugt im Bereich von 50 bis 800 nm aufweist. Der d₅₀-Wert der Teilchengröße wird wie üblich definiert als das Gewichtsmittel der Teilchengröße, wie sie mittels einer analytischen Ultrazentrifuge entsprechend der Methode von W. Scholtan und H. Lange, Kolloid-Z. und Z.-Polymere 250 (1972), Seiten 782 bis 796, bestimmt wurden.

Wenn die Pfropfgrundlage ein Dienkautschuk sein soll, wird zweckmäßig so verfahren, daß a₁₁) und a₁₃) allein, gegebenenfalls zusammen mit den weiteren Comonomeren a₁₂), in wäßriger Emulsion in an sich bekannter Weise bei Temperaturen von 20 bis 100°C, vorzugsweise von 50 bis 80°C, wie vorstehend beschrieben polymerisiert werden.

Die genauen Polymerisationsbedingungen, insbesondere Art, Dosierung und Menge des Emulgators, werden für Dienkautschuke innerhalb der oben angegebenen Bereich vorteilhaft so gewählt, daß der erhaltene Latex des Polymerisates a₁) einen dso-Wert (vgl. oben) im Bereich von etwa 100 bis 750 nm, vorzugsweise im Bereich von 100 bis 600 nm, besitzt. Es ist auch möglich, Emulsionspolymerisat mit mittleren Teilchengrößen im Bereich von 60 bis 150 nm in bekannter Weise (vgl. DE-AS 24 27 960) zu agglomerieren.

Die Pfropfhülle a₂) der Pfropfpolymerisate A weist eine Glasübergangstemperatur von mehr als 25°C auf und ist aufgebaut auf der Basis von
a₂₁) 0 bis 99,9, vorzugsweise 10 bis 89,9 und insbesondere 30 bis 79,7 Gew.-% eines vinylaromatischen Monomeren und
a₂₂) 0 bis 99,9, vorzugsweise 10 bis 89,8 und insbesondere 20 bis 69,9 Gew.-% eines polaren ethylenisch ungesättigten Monomeren sowie
a₂₃) 0,1 bis 20, vorzugsweise 0,5 bis 10 Gew.-% eines eine oder mehrere saure Gruppen enthaltenden, von a₂₂) verschiedenen Momomeren oder
a₂₄) 0,1 bis 20, vorzugsweise 0,5 bis 10 Gew.-% eines Monomeren a₁₄).

Als vinylaromatische Monomere a₂₁) werden Styrol und substituierte Styrole der allgemeinen Formel I bevorzugt 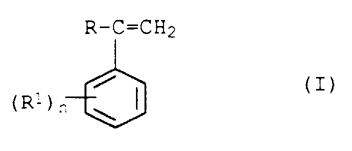 wobei R einen Alkylrest mit 1 bis 8 C-Atomen, ein Wasserstoffatom oder Halogen und R¹ Alkylreste mit 1 bis 8 C-Atomen oder ein Halogenatom darstellen und n den Wert 0, 1, 2 oder 3 hat.

Einzeln genannt seien hier beispielhaft Styrol, α-Methylstyrol und p-Methylstyrol.

Die Monomeren a₂₂) unterliegen an sich keiner besonderen Beschränkung, insbesondere bevorzugt werden jedoch Acrylnitril, Methacrylnitril und (Meth)acrylsäureester mit 1 bis 4 C-Atomen im Alkylrest. Acrylnitril und Methylmethacrylat sowie deren Gemische haben sich als besonders geeignet erwiesen.

Als saure Gruppen für die Monomere a₂₃) kommen insbesondere Carbonsäure-, Phosphorsäure- und/oder Sulfonsäuregruppen in Betracht. Beispielhaft seien α,β-ungesättigte Carbonsäuren wie Acrylsäure, Methacrylsäure, Citraconsäure, Crotonsäure, Fumarsäure, Itaconsäure, Maleinsäure, Vinylsulfonsäure, Vinylbenzolsulfonsäure, Vinylphosphorsäure und Zimtsäure sowie im Fall von Dicarbonsäuren wie Fumarsäure und Maleinsäure deren Halbester bzw. Halbamide genannt.

Beispiele für Monomere a₂₄) wurden bereits in der Beschreibung der Komponente a₁₄) für die Pfropfgrundlage angegeben.

Zur Herstellung des Pfropfmischpolymerisats A wird die Monomermischung aus a₂₁), a₂₂) und a₂₃) in Gegenwart der Pfropfgrundlage a₁) polymerisiert.

Es ist vorteilhaft, die Pfropfmischpolymerisation auf das als Pfropfgrundlage a₁) dienende Polymerisat wiederum in wäßriger Emulsion durchzuführen. Sie kann im gleichen System wie die Polymerisation der Pfropfgrundlage vorgenommen werden, wobei weiter Emulgator und Initiator zugegeben werden können. Diese müssen mit den zur Herstellung der Pfropfgrundlage a₁) verwendeten Emulgatoren bzw. Initiatoren nicht identisch sein. So kann es z.B. zweckmäßig sein, als Initiator für die Herstellung der Pfropfgrundlage a₁) ein Persulfat zu verwenden, zur Polymerisation der Pfropfhülle a₂) jedoch ein Redoxinitiatorsystem einzusetzen. Im übrigen gilt für die Wahl von Emulgator, Initiator und Polymerisationshilfsstoffen das bei der Herstellung der Pfropfgrundlage a₁ gesagte. Das aufzupfropfende Monomerengemisch kann dem Reaktionsgemisch auf einmal, absatzweise in mehreren Stufen oder vorzugsweise kontinuierlich während der Polymerisation zugegeben werden. Die Pfropfmischpolymerisation wird so gesteuert, daß im allgemeinen ein Pfropfgrad von 10 bis 60 Gew.-%, vorzugsweise von 15 bis 45 Gew.-%, resultiert.

Als Komponente B enthalten die erfindungsgemäßen thermoplastischen Formmassen 4,9 bis 95, vorzugsweise 25 bis 90 und insbesondere 50 bis 84,9 Gew.-% eines oder mehrerer Polymerer mit einer Glasübergangstemperatur von mehr als 25°C.

Beispiele für geeignete Thermoplaste B sind gegebenenfalls schlagzäh modifiziertes Polymethylmethacrylat sowie insbesondere Copolymere aus einem vinylaromatischen Monomeren und einem polaren, copolymerisierbaren, ethylenisch ungesättigten Monomeren, die gegebenenfalls schlagzäh modifiziert sind. Geeignete vinylaromatische sowie polare, copolymersierbare, ethylenisch ungesättigte Monomere sind auch hier die bei der Herstellung der Pfropfhülle als a₂₁) und a₂₂) genannten. Besonders bevorzugte Thermoplaste B sind Styrol-Acrylnitril- und α-Methylstyrol-Acrylnitril-Copolymere.

Auch andere schlagzäh modifizierte Thermoplasten wie Blends aus Polycarbonat/ABS, Polycarbonat/ASA, PMMA/ASA, Polyphenylenether/ schlagzähes Polystyrol, schlagzähes PVC, ABS und ASA können als Komponente B eingesetzt werden.

Ein wichtiger Bestandteil der erfindungsgemäßen thermoplastischen Formmassen ist die Komponente C, nämlich Verbindungen mehrwertiger Metalle, ausgewählt aus den Carbonaten, Sulfaten, Phosphaten und Carbonsäuresalzen der Erdalkalimetalle, des Zinks, des Aluminiums, des Zinns und den Carbonaten, Sulfaten, Phosphaten und Carbonsäuresalzen der Metalle der VIII. Nebengruppe des Periodensystems.

Als Beispiele, die sich in der Praxis besonders bewahrt haben, seien Zinkcarbonat, Zinkacetat und Zinkstearat genannt.

Der Zeitpunkt, zu dem die Komponente C zugegeben wird, ist nicht kritisch; dies kann bereits bei der Herstellung des Pfropfpolymerisats oder erst bei der Abmischung der Komponenten A und B erfolgen.

Neben den Komponenten A bis C können die erfindungsgemäßen thermoplastischen Formmassen noch bis zu 40, vorzugsweise bis zu 20 Gew.-% übliche Zusatzstoffe und Verarbeitungshilfsmittel enthalten. Als solche seien beispielsweise genannt: Füllstoffe, weitere verträgliche Polymere, Antistatika, Antioxidantien, Flammschutzmittel, Schmiermittel, Farbstoffe und Pigmente. Entsprechende Produkte sind dem Fachmann an sich bekannt und in der Literatur beschrieben, so daß sich hier nähere Angaben erübrigen.

Die Herstellung der erfindungsgemäßen thermoplastischen Formmassen kann durch Abmischen der Komponenten (gegebenenfalls nach Isolierung des Pfropfpolymerisats aus der Emulsion, wenn die Herstellung durch Emulsionspolymerisation erfolgte), durch gemeinsames Extrudieren, Kneten oder Walzen erfolgen. Die Komponente C kann bereits bei der Herstellung des Pfropfpolymerisats A oder aber beim Mischen von A und B und gegebenenfalls D zugesetzt werden.

Die erfindungsgemäßen thermoplastischen Formmassen lassen sich nach den für die Thermoplastverarbeitung üblichen Verfahren, wie z.B. Extrusion und Spritzgießen, zu den verschiedenartigsten Formkörpern, wie z.B. Fensterprofilen, Gartenmöbeln, Bcoten, Schildern, Lampenabdeckungen, Automobilteilen, Elektro- und Haushaltsgerätegehäusen und Kinderspielzeug verarbeiten. Die erfindungsgemäßen thermoplastischen Formmassen eignen sich besonders zur Herstellung von matten Formkörpern, bei denen eine hohe Schlagzähigkeit gefordert ist.

Die in den Beispielen genannten Teile und Prozente beziehen sich, soweit nicht anders angegeben, auf das Gewicht.

### Beispiele 1 bis 14

1. Herstellung der Pfropfgrundlage a₁)
   a) Die Herstellung der jeweiligen Pfropfgrundlage auf Acrylesterbasis (a₁₁), a₁₃), a₁₄)) erfolgte nach folgender allgemeiner Vorschrift:
      160 g des in Tabelle 1 zur Herstellung der Pfropfgrundlage a₁) angegebenen Monomerengemische wurden in 1500 g Wasser unter Zusatz von 5 g des Natriumsalzes einer C₁₂- bis C₁₈-Paraffinsulfonsäure, 3 g Kaliumperoxodisulfat, 3 g Natriumhydrogencarbonat und 1,5 g Natriumpyrophosphat unter Rühren auf 65°C erwärmt. 10 Minuten nach dem Anspringen der Polymerisationsreaktion wurden innerhalb von 3 Stunden weitere 840 g der in Tabelle 1 angegebenen Mischung zugegeben. Nach Beendigung der Monomerzugabe wurde die Emulsion noch eine Stunde bei 65°C gehalten.
   b) Die Herstellung der jeweiligen Pfropfgrundlage auf Butadienbasis (a₁₁), a₁₂), a₁₄)) erfolgte nach folgender Vorschrift:
      Durch Polymerisation von 600 g des in Tabelle 2 zur Herstellung der Pfropfgrundlage angegebenen Monomerengemisches in Gegenwart einer Lösung von 6 g tert.-Dodecylmercaptan, 7 g C₁₄-Na-Alkylsulfonat als Emulgator, 2 g Kaliumperoxodisulfat und 2 g Natriumpyrophosphat in 800 ml Wasser wurde bei 65°C ein Polybutadienlatex hergestellt. Der Umsatz betrug 98 %. Es wurde ein Latex erhalten, dessen mittlere Teilchengröße bei 100 nm lag. Der erhaltene Latex wurde durch Zusatz von 25 g einer Emulsion eines Copolymeren aus 96 Teilen Ethylacrylat und 4 Teilen Methacrylsäureamid mit einem Feststoffgehalt von 10 Gew.-% agglomeriert, wobei ein Polybutadienlatex mit einer mittleren Teilchengröße von 350 nm entstand.
2. Herstellung der teilchenförmigen Pfropfpolymerisate
   a) 2100 g der nach obiger Vorschrift (la) hergestellten Emulsion wurden mit 1150 g Wasser, 2,7 g Kaliumperoxodisulfat und gegebenenfalls 13,2 g der Verbindung C (ZnCO₃ bzw. Zn(AcO)₂) gemischt und unter Rühren auf 65°C erwärmt. Nach Erreichen der Reaktionstemperatur wurden im Lauf von 3 Stunden 660 g des in Tabelle 1 für die Herstellung der Pfropfhülle a₂) angegebenen Monomerengemisches zudosiert. Nach Beendigung der Zugabe wurde die Emulsion noch 2 Stunden bei 65°C gehalten. Das Pfropfpolymerisat wurde mittels Calciumcloridlösung bei 95°C aus der Emulsion gefällt, mit Wasser gewaschen und im warmen Luftstrom getrocknet.
   b) Nach Zusetzen von 400 g Wasser, 4 g Na-C₁₄-Alkylsulfonat, 2 g Kaliumperoxodisulfat und gegebenenfalls 8 g der Verbindung C (ZnCO₃ bzw. Zn(AcO)₂) zu der nach obiger Vorschrift (1b) hergestellten Pfropfgrundlage wurden 400 g des in Tabelle 2 für die Herstellung der Pfropfhülle a₂) angegebenen Monomerengemisches innerhalb von 4 Stunden zugeführt. Die Polymerisation erfolgte unter Rühren des Ansatzes bei 75°C. Der Umsatz, bezogen auf die Pfropfmonomere, war praktisch quantitativ. Die erhaltene Pfropfkautschukdispersion wurde mittels Magnesiumsulfatlösung gefällt und das abgetrennte Pfropfmischpolymerisat mit destilliertem Wasser gewaschen und getrocknet.
3. Abmischung mit Komponente B
   Zur Herstellung der Abmischungen wurde als Komponente B ein Styrol/Acrylnitrilcopolymerisat mit einem Acrylnitril-Gehalt von 35 % und einer Viskositätszahl von 80 ml/g (gemessen in 0,5 gew.-%iger Lösung in Dimethylformamid bei 25°C) verwendet. Das gefällte und getrocknete Pfropfmischpolymerisat aus (2) wurde auf einem Extruder bei 260°C so mit der Komponente B abgemischt, daß das resultierende Gemisch einen Pfropfpolymerisatanteil von 30 % aufwies. Aus diesem Gemisch wurden durch Spritzguß Formteile hergestellt.
4. Prüfungen
   Die Prüfungen der Kerbschlagzähigkeit erfolgte an Normkleinstäben mit gefräster Kerbe gemäß DIN 53453. Die Glanzmessung erfolgte an Rundscheiben im Winkel von 45° (Reflektion) mit einem Goniophotometer GP 2 der Fa. C. Zeiss.

**Tabelle 1**

| | Pfropfgrundlage a₁) ¹⁾ | | | Pfropfhülle a₂) ²⁾ | | | | Kerbschlagzähigkeit bei RT | Glanz ³⁾ | |
|---|---|---|---|---|---|---|---|---|---|---|
| Bsp | BA | DCPA | HEA | S | AN | MAS | C | [kJ/m²] | a) | b) |
| 1 | 96,5 | 2 | 1,5 | 74 | 23 | 1 | 2 ZnCO₃ | 11,0 | 19 | 23 |
| 2 | 96,5 | 2 | 1,5 | 74 | 23 | 1 | 2 Zn(AcO)₂ | 11,2 | 22 | 25 |
| 3 | 96,5 | 2 | 1,5 | 75 | 24 | 1 | 2 ZnCO₃⁵⁾ | 10,4 | 16 | 21 |
| 4 | 96,5 | 2 | 1,5 | 75 | 24 | 1 | 2 Zn(ACO)₂⁶⁾ | 10,7 | 12 | 16 |
| 5V⁴⁾ | 96,5 | 2 | 1,5 | 75 | 24 | 1 | - | 11,2 | 19 | 43 |
| 6V⁴⁾ | 96,5 | 2 | 1,5 | 75 | 25 | - | - | 6,4 | 62 | 57 |
| 7V⁴⁾ | 98 | 2 | - | 75 | 25 | - | - | 4,1 | 63 | 60 |

| | | | | | | | | | | |
|---|---|---|---|---|---|---|---|---|---|---|
| ¹⁾ Zusammensetzung des zur Herstellung der Pfropfgrundlage a₁) verwendeten Monomerengemisches | | | | | | | | | | |
| ²⁾ Zusammensetzung des zur Herstellung der Pfropfhülle a₂) verwendeten Monomerengemisches | | | | | | | | | | |
| ³⁾ 45° Glanz bestimmt an Formkörpern aus Formmassen, bei deren Abmischung unter a) schwach und b) stark scherenden Bedingungen gearbeitet wurde | | | | | | | | | | |
| ⁴⁾ Vergleichsversuche | | | | | | | | | | |
| ⁵⁾ Zugabe von, bezogen auf die Gesamtformmasse, 2 Gew.-% Zinkcarbonat bei Abmischung mit Polymerisat B | | | | | | | | | | |
| ⁶⁾ Zugabe von, bezogen auf die Gesamtformmasse, 2 Gew.-% Zinkacetat bei Abmischung mit Polymerisat B AN = Acrylnitril BA = Butylacrylat C = Verbindung gemäß Anspruch 1, Menge in Gew.-%, bezogen auf a₂) DCPA = Acrylsäureester des Tricyclodecenylalkohols HEA = 2-Hydroxyethylacrylat S = Styrol MAS = Methacrylsäure Zn(AcO)₂= Zinkacetat | | | | | | | | | | |

**Tabelle 2**

| | Pfropfgrundlage a₁) | | Pfropfhülle a₂) | | | | Kerbschlagzähigkeit bei RT | Glanz ³⁾ | |
|---|---|---|---|---|---|---|---|---|---|
| Bsp. | Bu | HEA | S | AN | MAS | CO₃ | [kJ/m²] | a) | b) |
| 8 | 99 | 1 | 68 | 29 | 1 | 2 ZnCo₃ | 12,8 | 19 | 22 |
| 9 | 99 | 1 | 68 | 29 | 1 | 2 Zn(AcO)₂ | 12,1 | 20 | 29 |
| 10 | 99 | 1 | 69 | 30 | 1 | 2 ZnCO₃⁵⁾ | 13,1 | 22 | 27 |
| 11 | 99 | 1 | 69 | 30 | 1 | 2 Zn(ACO)₂⁶⁾ | 12,5 | 25 | 30 |
| 12V⁴⁾ | 99 | 1 | 69 | 30 | 1 | - | 13,0 | 23 | 42 |
| 13V⁴⁾ | 99 | 1 | 70 | 30 | - | - | 10,7 | 61 | 67 |
| 14V⁴⁾ | 100 | - | 70 | 30 | - | - | 11,0 | 65 | 62 |

| | | | | | | | | | |
|---|---|---|---|---|---|---|---|---|---|
| ¹⁾ Zusammensetzung des zur Herstellung der Pfropfgrundlage a₁) verwendeten Monomerengemisches ²⁾ Zusammensetzung des zur Herstellung der Pfropfhülle a₂) verwendeten Monomerengemisches ³⁾ 45° Glanz bestimmt an Formkörpern aus Formmassen, bei deren Abmischung unter a) schwach und b) stark scherenden Bedingungen gearbeitet wurde | | | | | | | | | |
| ⁴⁾ Vergleichsversuche | | | | | | | | | |
| ⁵⁾ Zugabe von, bezogen auf die Gesamtformmasse, 2 Gew.-% Zinkcarbonat bei Abmischung mit Polymerisat B | | | | | | | | | |
| ⁶⁾ Zugabe von, bezogen auf die Gesamtformmasse, 2 Gew.-% Zinkacetat bei Abmischung mit Polymerisat B AN = Acrylnitril Bu = Butadien C = Verbindung gemäß Anspruch 1, Menge in Gew.-%, bezogen auf a₂) DCPA = Acrylsäureester des Tricyclodecenylalkohols HEA = 2-Hydroxyethylacrylat S = Styrol MAS = Methacrylsäure Zn(AcO)₂ = Zinkacetat | | | | | | | | | |

### Beispiele 15 bis 26

1. Herstellung der Pfropfgrundlage a₁)
   Dies erfolgte wie bei den Beispielen 1 bis 14 beschrieben, nur wurde anstelle von Hydroxyethylacrylat Dimethylaminoethylacrylat als Monomer a₁₄) verwendet.
2. Herstellung der teilchenförmigen Pfropfpolymerisate
   Dies erfolgte wie bei den Beispielen 1 bis 14 beschrieben.
3. Abmischung mit Komponente B
   Zur Herstellung der Abmischungen wurde als Komponente B ein Styrol/Acrylnitril-Copolymerisat mit einem Acrylnitril-Gehalt von 35 % und einer Viskositätszahl von 80 ml/g verwendet. Das gefällte und getrocknete Pfropfmischpolymerisat aus (2) wurde auf einem Extruder bei 260°C so mit der Hartkomponente abgemischt, daß das resultierende Gemisch einen Pfropfpolymerisatanteil von 50 % aufwies. Aus diesem Gemisch wurden durch Spritzguß Formteile hergestellt.
4. Prüfungen
   Die Prüfung der Kerbschlagzähigkeit erfolgte an Normkleinstäben mit gefräster Kerbe gemäß DIN 53453. Die Glanzmessung erfolgte an Rundscheiben im Winkel von 45° (Reflektion) mit einem Goniophotometer GP 2 der Fa. C. Zeiss.

**Tabelle 3**

| | Pfropfgrundlage a₁) ¹⁾ | | | Pfropfhülle a₂) ²⁾ | | | | Kerbschlagzähigkeit bei RT | Glanz ³⁾ | |
|---|---|---|---|---|---|---|---|---|---|---|
| Bsp | BA | DCPA | DMAEA | S | AN | MAS | C | [kJ/m²] | a) | b) |
| 15 | 97 | 2 | 1 | 74 | 23 | 1 | 2 ZnCO₃ | 24 | 9 | 15 |
| 16 | 97 | 2 | 1 | 74 | 23 | 1 | 2 Zn(AcO)₂ | 22 | 14 | 20 |
| 17 | 97 | 2 | 1 | 75 | 24 | 1 | 2 ZnCO₃⁵⁾ | 23 | 16 | 21 |
| 18 | 97 | 2 | 1 | 75 | 24 | 1 | 2 Zn(ACO)₂⁶⁾ | 20 | 12 | 16 |
| 19V⁴⁾ | 97 | 2 | 1 | 75 | 24 | 1 | - | 23 | 11 | 45 |
| 20V⁴⁾ | 98 | 2 | 1 | 75 | 25 | - | - | 11 | 65 | 60 |

| | | | | | | | | | | |
|---|---|---|---|---|---|---|---|---|---|---|
| ¹⁾ Zusammensetzung des zur Herstellung der Pfropfgrundlage a₁) verwendeten Monomerengemisches | | | | | | | | | | |
| ²⁾ Zusammensetzung des zur Herstellung der Pfropfhülle a₂) verwendeten Monomerengemisches | | | | | | | | | | |
| ³⁾ 45° Glanz bestimmt an Formkörpern aus Formmassen, bei deren Abmischung unter a) schwach und b) unter stark scherenden Bedingungen gearbeitet wurde | | | | | | | | | | |
| ⁴⁾ Vergleichsversuche | | | | | | | | | | |
| ⁵⁾ Zugabe von, bezogen auf die Gesamtformmasse, 2 Gew.-% Zinkcarbonat bei Abmischung mit Polymerisat B | | | | | | | | | | |
| ⁶⁾ Zugabe von, bezogen auf die Gesamtformmasse, 2 Gew.-% Zink) acetat bei Abmischung mit Polymerisat B AN = Acrylnitril BA = Butylacrylat C = Komponente C gemäß Anspruch 1, Menge in Gew.-%, bezogen auf a₂) DCPA = Acrylsäureester des Tricyclodecenylalkohols DMAEA = Dimethylaminoethylacrylat S = Styrol MAS = Methacrylsäure Zn(AcO)₂ = Zinkacetat | | | | | | | | | | |

**Tabelle 4**

| | Pfropfgrundlage a₁) ¹⁾ | | Pfropfhülle a2) ²⁾ | | | | Kerbschlagzähigkeit bei RT | Glanz ³⁾ | |
|---|---|---|---|---|---|---|---|---|---|
| Bsp | Bu | DMAEA | S | AN | MAS | C | [kJ/m²] | a) | b) |
| 21 | 99 | 1 | 68 | 29 | 1 | 2 ZnCO₃ | 24 | 15 | 24 |
| 22 | 99 | 1 | 68 | 29 | 1 | 2 Zn(AcO)₂ | 23 | 22 | 31 |
| 23 | 99 | 1 | 69 | 30 | 1 | 2 ZnCO₃⁵⁾ | 21 | 13 | 19 |
| 24 | 99 | 1 | 69 | 30 | 1 | 2 Zn(AcO)₂⁶⁾ | 22 | 20 | 28 |
| 25V⁴⁾ | 99 | 1 | 69 | 30 | 1 | - | 22 | 23 | 47 |
| 26V⁴⁾ | 100 | - | 70 | 30 | - | - | 18 | 61 | 64 |

| | | | | | | | | | |
|---|---|---|---|---|---|---|---|---|---|
| ¹⁾ Zusammensetzung des zur Herstellung der Pfropfgrundlage a₁) verwendeten Monomerengemisches | | | | | | | | | |
| ²⁾ Zusammensetzung des zur Herstellung der Pfropfhülle a₂) verwendeten Monomerengemisches | | | | | | | | | |
| ³⁾ 45° Glanz bestimmt an Formkörpern aus Formmassen, bei deren Abmischung unter a) schwach und b) stark scherenden Bedingungen gearbeitet wurde | | | | | | | | | |
| ⁴⁾ Vergleichsversuche | | | | | | | | | |
| ⁵⁾ Zugabe von, bezogen auf die Gesamtformmasse, 2 Gew.-% Zinkcarbonat bei Abmischung mit Polymerisat B | | | | | | | | | |
| ⁶⁾ Zugabe von, bezogen auf die Gesamtformmasse, 2 Gew.-% Zinkacetat bei Abmischung mit Polymerisat B AN = Acrylnitril Bu = Butadien C = Verbindung gemäß Anspruch 1, Menge in Gew.-%, bezogen auf a₂) DMAEA = Dimethylaminoethylacrylat S = Styrol MAS = Methacrylsäure Zn(AcO)₂ = Zinkacetat | | | | | | | | | |

### Beispiele 27 bis 38

1. Herstellung der Pfropfgrundlage
   Dies erfolgte wie in den Beispielen 1 bis 26 beschrieben, nur wurde in der Pfropfgrundlage als Monomer ais) anstelle eines Monomeren a₁₄) Methacrylsäure und in der Pfropfhülle als Monomer a₂₄) anstelle eines Monomeren a23) Dimethylaminoethylacrylat eingesetzt.
2. Herstellung der teilchenförmigen Pfropfmischpolymerisate.
   Dies erfolgte wie bei den Beispielen 1 bis 26 beschrieben.
3. Abmischung mit Komponente B
   Dies erfolgte wie in den Beispielen 1 bis 14 beschrieben.
4. Prüfungen
   Dies erfolgte wie in den Beispielen 1 bis 26 beschrieben.

**Tabelle 5**

| | Pfropfgrundlage a₁) ¹⁾ | | | Pfropfhülle a₂) ²⁾ | | | | Kerbschlagzähigkeit bei RT | Glanz ³⁾ | |
|---|---|---|---|---|---|---|---|---|---|---|
| Bsp | BA | DCPA | MAS | S | AN | DMAEA | C | [kJ/m²] | a) | b) |
| 27 | 97 | 2 | 1 | 73 | 23 | 2 | 2 ZnCO₃ | 21 | 7 | 12 |
| 28 | 97 | 2 | 1 | 73 | 23 | 2 | 2 Zn(AcO)₂ | 23 | 11 | 17 |
| 29⁵⁾ | 97 | 2 | 1 | 74 | 24 | 2 | - | 21 | 13 | 16 |
| 30⁶⁾ | 97 | 2 | 1 | 74 | 24 | 2 | - | 23 | 12 | 19 |
| 31V⁴⁾ | 97 | 2 | 1 | 74 | 24 | 2 | - | 22 | 11 | 35 |
| 32V⁴⁾ | 98 | 2 | - | 75 | 25 | - | - | 11 | 65 | 60 |

| | | | | | | | | | | |
|---|---|---|---|---|---|---|---|---|---|---|
| ¹⁾ Zusammensetzung des zur Herstellung der Pfropfgrundlage a₁) verwendeten Monomerengemisches | | | | | | | | | | |
| ²⁾ Zusammensetzung des zur Herstellung der Pfropfhülle a₂) verwendeten Monomerengemisches | | | | | | | | | | |
| ³⁾ 45° Glanz bestimmt an Formkörpern aus Formmassen, bei deren Abmischung unter a) schwach und b) stark scherenden Bedingungen gearbeitet wurde | | | | | | | | | | |
| ⁴⁾ Vergleichsversuche | | | | | | | | | | |
| ⁵⁾ Zugabe von, bezogen auf die Gesamtformmasse, 2 Gew.-% Zinkcarbonat bei Abmischung mit Polymerisat B | | | | | | | | | | |
| ⁶⁾ Zugabe von, bezogen auf die Gesamtformmasse, 2 Gew.-% Zinkacetat bei Abmischung mit Polymerisat B AN = Acrylnitril BA = Butylacrylat C = Verbindung gemäß Anspruch 1, Menge in Gew.-%, bezogen auf a₂) DCPA = Acrylsäureester des Tricyclodecenylalkohols DMAEA = Dimethylaminoethylacrylat S = Styrol MAS = Methacrylsäure Zn(AcO)₂ = Zinkacetat | | | | | | | | | | |

**Tabelle 6**

| | Pfropfgrundlage a₁) ¹⁾ | | Pfropfhülle a2) ²⁾ | | | | Kerbschlagzähigkeit bei RT | Glanz ³⁾ | |
|---|---|---|---|---|---|---|---|---|---|
| Bsp | Bu | MAS | S | AN | DMAEA | C | [kJ/m²] | a) | b) |
| 33 | 99 | 1 | 68 | 29 | 1 | 2 ZnCO₃ | 24 | 13 | 21 |
| 34 | 99 | 1 | 68 | 29 | 1 | 2 Zn(AcO)₂ | 23 | 18 | 27 |
| 35⁵⁾ | 99 | 1 | 69 | 30 | 1 | - | 22 | 13 | 19 |
| 36⁶⁾ | 99 | 1 | 69 | 30 | 1 | - | 21 | 22 | 30 |
| 37V⁴⁾ | 99 | 1 | 69 | 30 | 1 | - | 22 | 23 | 41 |
| 38V⁴⁾ | 100 | - | 70 | 30 | - | - | 18 | 59 | 63 |

| | | | | | | | | | |
|---|---|---|---|---|---|---|---|---|---|
| ¹⁾ Zusammensetzung des zur Herstellung der Pfropfgrundlage a₁) verwendeten Monomerengemisches | | | | | | | | | |
| ²⁾ Zusammensetzung des zur Herstellung der Pfropfhülle a₂) verwendeten Monomerengemisches | | | | | | | | | |
| ³⁾ 45° Glanz bestimmt an Formkörpern aus Formmassen, bei deren Abmischung unter a) schwach und b) stark scherenden Bedingungen gearbeitet wurde | | | | | | | | | |
| ⁴⁾ Vergleichsversuche | | | | | | | | | |
| ⁵⁾ Zugabe von, bezogen auf die Gesamtformmasse, 2 Gew.-% Zinkcarbonat bei Abmischung mit Polymerisat B | | | | | | | | | |
| ⁶⁾ Zugabe von, bezogen auf die Gesamtformmasse, 2 Gew.-% Zinkacetat bei Abmischung mit Polymerisat B AN = Acrylnitril Bu = Butadien C = Verbindung gemäß Anspruch 1, Menge in Gew.-%, bezogen auf a₂) DMAEA = Dimethylaminoethylacrylat S = Styrol MAS = Methacrylsäure Zn(AcO)₂ = Zinkacetat | | | | | | | | | |

## Patentansprüche

1. Thermoplastische Formmassen, enthaltend als wesentliche Komponenten
A) 4,9 - 95 Gew.-%, bezogen auf das Gesamtgewicht der Formmasse, eines Pfropfpolymerisats aus
a₁) 30 - 90 Gew.-%, bezogen auf A), einer kautschukelastischen Pfropfgrundlage mit einer Glasübergangstemperatur von weniger als 0°C und einer mittleren Teilchengröße (d₅₀) im Bereich von 30-1000 nm, auf der Basis von, bezogen auf a1),
a₁₁) 50 - 99,8 Gew.-%, bezogen auf a₁), Alkylacrylaten mit 1 bis 8 C-Atomen im Alkylrest, Dienen oder deren Mischungen
a₁₂) 0 - 5 Gew.-%, bezogen auf a₁), polyfunktionellen, vernetzend wirkenden Monomeren
a₁₃) 0 - 49,8 Gew.-%, bezogen auf a₁), weiteren ethylenisch ungesättigten, copolymerisierbaren von a₁₁) und a₁₄) verschiedenen Monomeren und
a₁₄) 0,1 - 10 Gew.-%, bezogen auf a₁), Hydroxyalkyl(meth)acrylaten oder basische Gruppen enthaltenden ethylenisch ungesättigten Monomeren oder deren Mischungen oder
a₁₅) 0,1 - 10 Gew.-% eines Monomeren a₂₃)
und
a₂) 10 - 70 Gew.-%, bezogen auf A), einer Pfropfhülle mit einer Glasübergangstemperatur oberhalb von 25°C, auf der Basis von
a₂₁) 0 - 99,9 Gew.-% eines vinylaromatischen Monomeren
a₂₂) 0 - 99,9 Gew.-% mindestens eines polaren ethylenisch ungesättigten Monomeren
a₂₃) 0,1 - 20 Gew.-% eines eine oder mehrere saure Gruppen enthaltenden ethylenisch ungesättigten Monomeren, oder
a₂₄) 0,1 - 20 Gew.-% eines Monomeren a₁₄),
B) 4,9 - 95 Gew.-%, bezogen auf das Gesamtgewicht der Formmasse, mindestens eines Polymeren mit einer Glasübergangstemperatur von mehr als 25°C,
C) 0,1 - 10 Gew.-%, bezogen auf das Gesamtgewicht der Formmasse, Verbindungen mehrwertiger Metalle, ausgewählt aus den Carbonaten, Sulfaten, Phosphaten und Carbonsäuresalzen der Erdalkalimetalle, des Zinks, des Aluminiums, des Zinns und den Carbonaten, Sulfaten, Phosphaten und Carbonsäuresalzen der Metalle der VIII. Nebengruppe des Periodensystems,
D) 0 - 40 Gew.-%, bezogen auf das Gesamtgewicht der Formmasse, übliche Zusatzstoffe und Verarbeitungshilfsmittel,
mit der Maßgabe, daß, wenn in der Pfropfgrundlage Monomere a₁₄) vorhanden sind, in der Pfropfhülle Monomere a₂₃) vorhanden sind und, wenn in der Pfropfgrundlage Monomere a₁₅) vorhanden sind, in der Pfropfhülle Monomere a₂₄) vorhanden sind.

2. Thermoplastische Formmasse nach Anspruch 1, wobei die kautschukelastische Pfropfgrundlage
a₁₁) 85 - 99,8 Gew-% eines Alkylacrylats mit 1 bis 8 C-Atomen im Alkylrest,
a₁₂) 0,1 - 5 Gew.-% mindestens eine polyfunktionellen, vernetzend wirkenden Monomeren und
a₁₄) 0,1 - 10 Gew.-% eines Hydroxyalkyl(meth)acrylats oder basische Gruppen enthaltenden ethylenisch ungesättigten Monomeren oder deren Mischungen,
enthält.

3. Thermoplastische Formmasse nach Anspruch 1, wobei die kautschukelastische Pfropfgrundlage a₁) aufgebaut ist aus
a₁₁) 50 - 99,8 Gew.-% eines Diens,
a₁₂) 0 - 49,9 Gew.-% weiteren ethylenisch ungesättigten, copolymerisierbaren, von a₁₁) und a₁₄) verschiedenen Monomeren,
a₁₄) 0,1 - 10 Gew.-% eines Hydroxyalkyl(meth)acrylats )acrylats oder basische Gruppen enthaltenden ethylenisch ungesättigten Monomeren oder deren Mischungen

4. Verwendung der thermoplastischen Formmassen gemäß einem der Ansprüche 1 bis 3 zur Herstellung von Formkörpern.

5. Formkörper, erhalten aus thermoplastischen Formmassen gemäß den Ansprüchen 1 bis 3 als wesentlichen Komponenten.

## Claims

1. A thermoplastic molding material containing, as essential components,
A) 4.9 - 95% by weight, based on the total weight of the molding material, of a graft polymer of
a₁) 30 - 90% by weight, based on A), of an elastomeric grafting base having a glass transition temperature of less than 0°C and an average particle size (d₅₀) of 30-1000 nm, based on
a₁₁) 50 - 99.8% by weight, based on a₁), of alkyl acrylates where the alkyl radical is of 1 to 8 carbon atoms, dienes or mixtures thereof,
a₁₂) 0 - 5% by weight, based on a₁), of polyfunctional, crosslinking monomers,
a₁₃) 0 - 49.8% by weight, based on a₁), of further ethylenically unsaturated, copolymerizable monomers differing from a₁₁) and a₁₄) and
a₁₄) 0.1 - 10% by weight, based on a₁), of hydroxyalkyl (meth)acrylates or ethylenically unsaturated monomers containing basic groups or mixtures thereof or
a₁₅) 0.1 - 10% by weight of a monomer a₂₃),
the percentages a₁₁) to a₁₅) being based on a₁),
and
a₂) 10 - 70% by weight, based on A), of a graft having a glass transition temperature above 25°C, based on
a₂₁) 0 - 99.9% by weight of a vinylaromatic monomer,
a₂₂) 0 - 99.9% by weight of at least one polar ethylenically unsaturated monomer,
a₂₃) 0.1 - 20% by weight of an ethylenically unsaturated monomer containing one or more acidic groups or
a₂₄) 0.1 - 20% by weight of a monomer a₁₄),
B) 4.9 - 95% by weight, based on the total weight of the molding material, of at least one polymer having a glass transition temperature of more than 25°C,
C) 0.1 - 10% by weight, based on the total weight of the molding material, of compounds of polyvalent metals selected from the carbonates, sulfates, phosphates and carboxylic acid salts of the alkaline earth metals, of zinc, of aluminum and of tin and from the carbonates, sulfates, phosphates and carboxylic acid salts of metals of subgroup VIII of the Periodic Table, and
D) 0 - 40% by weight, based on the total weight of the molding material, of conventional additives and processing assistants,
with the proviso that, if monomers a₁₄) are present in the grafting base, monomers a₂₃) are present in the graft and, if monomers a₁₅) are present in the grafting base, monomers a₂₄) are present in the graft.

2. A thermoplastic molding material as claimed in claim 1, wherein the elastomeric grafting base contains
a₁₁) 85 - 99.8% by weight of an alkyl acrylate where the alkyl radical is of 1 to 8 carbon atoms,
a₁₂) 0.1 - 5% by weight of at least one polyfunctional, crosslinking monomer and
a₁₄) 0.1 - 10% by weight of a hydroxyalkyl (meth)acrylate or ethylenically unsaturated monomers containing basic groups or mixtures thereof.

3. A thermoplastic molding material as claimed in claim 1, wherein the elastomeric grafting base a₁) is composed of
a₁₁) 50 - 99.8% by weight of a diene,
a₁₂) 0 - 49.9% by weight of further ethylenically unsaturated, copolymerizable monomers differing from a₁₁) and a₁₄) and
a₁₄) 0.1 - 10% by weight of a hydroxyalkyl (meth)acrylate or ethylenically unsaturated monomers containing basic groups or mixtures thereof.

4. Use of a thermoplastic molding material as claimed in any of claims 1 to 3 for the production of moldings.

5. A molding obtained from a thermoplastic molding material as claimed in any of claims 1 to 3 as an essential component.

## Revendications

1. Masses à mouler thermoplastiques, qui contiennent, à titre de composants essentiels,
A) 4,9 à 95% en poids, par rapport au poids total de la masse à mouler, d'un polymère de greffage formé de
a₁) 30 à 90% en poids, par rapport à A), d'une base greffage présentant l'élasticité du caoutchouc et possédant une température de transition vitreuse inférieure à 0°C et un calibre moyen des particules (d₅₀) qui varie de 30 à 1000 nm, à la base de, par rapport à a₁),
a₁₁) 50 à 99,8% en poids, par rapport à a₁), d'acrylates d'alkyle dont le radical alkyle comporte de 1 à 8 atomes de carbone, de diènes, ou de leurs mélanges,
a₁₂) 0 à 5% en poids, par rapport à a₁), de monomères polyfonctionnels à activité réticulante,
a₁₃) 0 à 49,8% en poids, par rapport a₁), d'autres monomères différents de a₁₁) et de a₁₄) éthyléniquement insaturés et copolymérisables, et
a₁₄) 0,1 à 10% en poids, par rapport à a₁), de (méth)acrylates d'hydroxyalkyle ou de monomères éthyléniquement insaturés contenant des groupes basiques, ou de leurs mélanges, ou
a₁₅) 0,1 à 10% en poids d'un monomère a₂₃)
et
a₂) 10 à 70% en poids, par rapport à A), d'une gaine ou enveloppe de greffage qui possède une température de transition vitreuse supérieure à 25°C, à base de
a₂₁) 0 à 99,9% en poids d'un monomère vinyle aromatique,
a₂₂) 0 à 99,9% en poids d'au moins un monomère éthyléniquement insaturé et polaire,
a₂₃) 0,1 à 20% en poids d'un monomère éthyléniquement insaturé contenant un ou plusieurs radicaux acide, ou
a₂₄) 0,1 à 20% en poids d'un monomère a₁₄),
B) 4,9 à 95% en poids, par rapport au poids total de la masse à mouler, d'au moins un polymère qui possède une température de transition vitreuse supérieure à 25°C,
C) 0,1 à 10% en poids, par rapport au poids total de la masse à mouler de composés de métaux polyvalents, choisis parmi les carbonates, sulfates, phosphates et sels d'acides carboxyliques des métaux alcalino-terreux, du zinc, de l'aluminium, de l'étain et les carbonates, sulfates, phosphates et sels d'acides carboxylique des métaux du Vlllème sous-groupe du système périodique,
D) 0 à 40% en poids, par rapport au poids total de la masse à mouler, d'adjuvants de mise en oeuvre et d'additifs usuels,
avec la condition que, lorsque des monomères a₁₄) sont présents dans la base de greffage, soient présents des monomères a₂₃) dans la gaine ou enveloppe de greffage et que, lorsque des monomères a₁₅) sont présents dans la base de greffage, des monomères a₂₄) soient présents dans l'enveloppe ou gaine de greffage.

2. Masses à mouler thermoplastiques suivant la revendication 1, caractérisées en ce que la base de greffage présentant l'élasticité du caoutchouc contient
a₁₁) 85 à 99,8% en poids d'un acrylate d'alkyle dont la radical alkyle comporte de 1 à 8 atomes de carbone,
a₁₂) 0,1 à 5% en poids d'au moins un monomère polyfonctionnel, à activité réticulante, et
a₁₄) 0,1 à 10% en poids d'un (méth)acrylate d'hydroxyalkyle ou de monomères éthyléniquement insaturés contenant des radicaux basiques, ou de leurs mélanges.

3. Masses à mouler thermoplastiques suivant la revendication 1, caractérisées en ce que la base de greffage présentant l'élasticité du caoutchouc a₁) est constituée de
a₁₁) 50 à 99,8% en poids de diènes,
a₁₂) 0 à 49,9% en poids d'autres monomères qui diffèrent de a₁₁) et de a₁₄), éthyléniquement insaturés et copolymérisables,
a₁₄) 0,1 à 10% en poids d'un (méth)acrylate d'hydroxyalkyle ou de monomères éthyléniquement insaturés contenant des radicaux basiques, ou de leurs mélanges.

4. Utilisation des masses à mouler thermoplastiques suivant l'une quelconque des revendications 1 à 3, pour la fabrication d'articles ou corps moulés.

5. Articles ou corps moulés, obtenus à partir de masses à mouler thermoplastiques suivant l'une quelconque des revendications 1 à 3, à titre de composants essentiels.
